(19) Europäisches Patentamt
European Patent Office
Office européen des brevets

(11) **EP 3 752 858 B1**

(12) **EUROPÄISCHE PATENTSCHRIFT**

(45) Veröffentlichungstag und Bekanntmachung des Hinweises auf die Patenterteilung:
**12.07.2023   Patentblatt 2023/28**

(21) Anmeldenummer: **18826549.0**

(22) Anmeldetag: **14.12.2018**

(51) Internationale Patentklassifikation (IPC):
*G01S 13/44* (2006.01)   *G01S 13/87* (2006.01)
*G01S 13/931* (2020.01)   *G01S 7/35* (2006.01)
*G01S 13/34* (2006.01)

(52) Gemeinsame Patentklassifikation (CPC):
**G01S 13/878; G01S 7/354; G01S 13/343;**
**G01S 13/4454; G01S 13/931;** G01S 7/356;
G01S 13/4445

(86) Internationale Anmeldenummer:
**PCT/EP2018/084897**

(87) Internationale Veröffentlichungsnummer:
**WO 2019/158252 (22.08.2019 Gazette 2019/34)**

(54) **WINKELAUFLÖSENDER BREITBANDIGER RADARSENSOR FÜR KRAFTFAHRZEUGE**

ANGLE-RESOLVING BROADBAND RADAR SENSOR FOR MOTOR VEHICLES

CAPTEUR RADAR À LARGE BANDE À RÉSOLUTION ANGULAIRE POUR VÉHICULES AUTOMOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2018   DE 102018202289**

(43) Veröffentlichungstag der Anmeldung:
**23.12.2020   Patentblatt 2020/52**

(73) Patentinhaber: **Robert Bosch GmbH**
**70442 Stuttgart (DE)**

(72) Erfinder: **SCHOOR, Michael**
**70195 Stuttgart (DE)**

(56) Entgegenhaltungen:
DE-A1-102015 222 884     US-A1- 2006 022 866
US-A1- 2014 320 331

**Beschreibung**

Die Erfindung betrifft einen winkelauflösenden Radarsensor für Kraftfahrzeuge, mit einer Antennenordnung mit mehreren zum Empfang eingerichteten Antennen, die in einer Richtung, in welcher der Radarsensor winkelauflösend ist, in verschiedenen Positionen angeordnet sind, und mit einer Steuer- und Auswerteeinrichtung, die für eine Betriebsweise ausgelegt ist, bei der wenigstens eine zum Senden eingerichtete Antenne des Radarsensors ein Signal sendet, das von mehreren der zum Empfangen eingerichteten Antennen des Radarsensors empfangen wird, und der Winkel eines Radarziels anhand von Amplituden-und/oder Phasenbeziehungen zwischen Signalen jeweiliger Auswertungskanäle geschätzt wird, die unterschiedlichen Konfigurationen von sendenden und empfangenden Antennen entsprechen.

Stand der Technik

Radarsensoren werden in Kraftfahrzeugen beispielsweise zur Messung der Abstände, Relativgeschwindigkeiten und Azimutwinkel von im Vorfeld des eigenen Fahrzeugs georteten Fahrzeugen oder sonstigen Radarzielen eingesetzt. Mehrere Antennen sind dann beispielsweise in Abstand zueinander auf einer Horizontalen angeordnet, so dass unterschiedliche Azimutwinkel der georteten Radarziele zu Differenzen in den Lauflängen führen, die die Radarsignale vom Radarziel bis zur jeweiligen Antenne zurückzulegen haben. Diese Lauflängendifferenzen führen zu entsprechenden Unterschieden in der Amplitude und Phase der Signale, die von den Antennen empfangen und in den zugehörigen Auswertungskanälen ausgewertet werden. Für die Winkelschätzung nutzt man den Umstand aus, dass die Amplituden- und Phasenbeziehungen der von den verschiedenen Empfangsantennen erhaltenen Signale in charakteristischer Weise vom Winkel des Radarziels abhängig sind. Durch Abgleich der in den verschiedenen Kanälen empfangenen (komplexen) Amplituden mit entsprechenden Amplituden in einem Antennendiagramm lässt sich dann der Einfallswinkel des Radarsignals und damit der Azimutwinkel des Radarziels bestimmen. Auf entsprechende Weise lässt sich mit vertikal übereinander angeordneten Antennen auch der Elevationswinkel eines Radarziels schätzen.

Für ein einzelnes Ziel kann der Abgleich zwischen den empfangenen Amplituden und den Amplituden im Antennendiagramm erfolgen, indem man für jeden Winkel im Antennendiagramm eine Korrelation zwischen dem Vektor der gemessenen Amplituden (bei k Auswertungskanälen ist dies ein Vektor mit k komplexen Komponenten) und dem entsprechenden Vektor im Antennendiagramm berechnet. Diese Korrelation kann durch eine sogenannte DML-Funktion (Deterministic Maximum Likelihood Funktion) ausgedrückt werden, die, wenn ein bestimmter Vektor von gemessenen Amplituden gegeben ist, für jeden Winkel die Wahrscheinlichkeit dafür angibt, dass sich das Radarziel bei diesem Winkel befindet. Die Winkelschätzung besteht dann darin, dass man das Maximum dieser DML-Funktion aufsucht. Neben Maximum-Likelihood-Verfahren sind andere Verfahren zur Winkelschätzung bekannt, wie MUSIC (Multiple Signal Classification) oder ESPRIT (Estimation of Signal Parameters via Rotational Invariance Techniques).

US 2006/0022866 A1 beschreibt ein Radarsystem mit mehreren Empfangskanälen. Ein Verarbeitungssystem verwendet einen Algorithmus, z.B. einen Rückprojektionsalgorithmus, um die Art und den Ort von Hindernissen zu schätzen, die die elektromagnetische Welle reflektieren. In einem Beispiel wird ein Nahfeld-Fokussierungsalgorithmus verwendet, um ein 2D-Bild zu erzeugen und das Vorhandensein und den Ort eines Ziels zu detektieren.

US 2014/0320331 A1 beschreibt ein FMCW-Radarvorrichtung mit einer beweglichen Abtastvorrichtung mit Radarantennen.

DE 10 2015 222 884 A1 beschreibt ein Radarsystem mit verschachtelt seriellem Senden und parallelem Empfangen, bei dem eine digitale Strahlformung durchgeführt wird.

Offenbarung der Erfindung

Im Zuge einer weiteren Steigerung der Leistungsfähigkeit der Radarsensoren werden d,v-Schätzungen mit gesteigerter Auflösung erfolgen können.

Auch wird eine Zunahme der nutzbaren Sensorgröße, d.h. der Größe oder Apertur der Antennenanordnung, eine Steigerung der Genauigkeit der Winkelschätzung und eine verbesserte Winkeltrennung ermöglichen. Bei einem FMCW-(frequency modulated continuous wave)-Messverfahren mit linearen Frequenzrampen und einer Auswertung der Empfangssignale mittels diskreter Fourier-Transformation, insbesondere einer FFT (Fast Fourier Transformation), entspricht die Breite eines Entfernungsbins der Fourier-Transformation einem Entfernungsunterschied $\Delta r$ mit $\Delta r = c/(2F)$, wobei c die Lichtgeschwindigkeit ist und F der Frequenzhub einer linearen Frequenzrampe des FMCW-Sendesignals ist. Dieser Entfernungsunterschied wird hier auch als Entfernungsauflösung bezeichnet.

Unter der Entfernungsauflösung ist somit die kleinste Entfernungsdifferenz zu verstehen, bei der (bei gleicher Relativgeschwindigkeit) zwei Messwerte der Entfernung vom Radarsensor in der gegebenen Betriebsweise des Radarsensors noch auf getrennte Bins abgebildet werden können. Bei Durchführung einer FFT entspricht die Entfernungsauflösung dem Abstand zweier Entfernungsbins bei der FFT, i.e. der Breite eines Entfernungsbins. Hier und im folgenden werden die Begriffe Entfernungsauflösung und Breite des Entfernungsbins gleichbedeutend verwendet. Im Unterschied dazu wird unter der Entfernungstrennfähigkeit das doppelte der Breite des Entfernungsbins verstanden. Wird die Bandbreite eines Radarsensors gesteigert, ist beispielsweise bei einem Frequenzhub des Sendesignals von F = 2 GHz eine Entfernungsauflösung von $\Delta r$ = 7,5 cm möglich. Wird zugleich die Apertur oder, im Falle eines MIMO-(Multiple Input Multiple Output)-Radarsensors, die virtuelle Apertur gesteigert auf Werte ähnlicher Größenordnung, so können je nach Winkel eines Radarzieles die Lauflängenunterschiede zwischen Empfangssignalen einzelner Antennen oder Auswertungskanälen bereits als unterschiedliche Entfernungen von Radarzielen erfasst werden. Bei größeren Winkeln ist dann in den Fourier-Spektren der Auswertungskanäle an einer durch die d,v-Schätzung eines erfasste Radarzieles bestimmten Frequenzlage der Vektor der gemessenen Amplituden nicht mehr vollständig enthalten. Es ist möglich, dem durch eine künstliche Verkleinerung der genutzten Apertur der Antennenanordnung für die Erfassung größerer Winkel zu begegnen. Alternativ lässt sich durch Wahl einer geringeren Bandbreite und der damit einhergehenden Verbreiterung der Frequenz-Bins der Fourier-Spektren erreichen, dass der Vektor der gemessenen Amplituden vollständig erhalten wird. Beides hat jedoch den Nachteil, dass die volle Entfernungsauflösung und die volle Winkeltrennfähigkeit nicht gleichzeitig erzielt werden können.

Die oben beschriebenen Lauflängenunterschiede bei großer Bandbreite und großer Apertur haben insbesondere bei durch FFT erhaltenen Fourier-Spektren mehrere Auswirkungen.

Zum einen kann, wenn die Lauflängenunterschiede zwischen Empfangssignalen als unterschiedliche Entfernungen von Radarzielen erfasst werden, das einem Peak entsprechende Signal in den jeweiligen Auswertungskanälen in unterschiedlichen Frequenzbins der FFT abgebildet werden.

Zum anderen kommt es dabei zu einem Phasenversatz, der Pi pro Verschiebung um einen Bin beträgt. Dieser Phasenversatz tritt auf, wenn die Stützstelle (Frequenzposition) einer FFT nicht exakt der Frequenzlage entspricht, die der echten, individuellen Entfernung der jeweiligen Antennenkonfiguration entspricht. Der Phasenversatz kann in der Antennenkalibierung berücksichtigt werden, indem für die Winkelschätzung ein für identische Frequenzhübe bestimmtes Antennendiagramm verwendet wird.

Des weiteren kommt es durch die zur Bildung der FFT verwendete Fensterfunktion zu einem Amplitudenfehler. Dieser kann nicht ohne weiteres bei der Antennenkalibrierung berücksichtigt werden.

Aufgabe der Erfindung ist es, einen Radarsensor zu schaffen, der eine einfache und genaue Winkelschätzung auch bei großen Antennenarrays und Signalen mit hoher Bandbreite gestattet.

Diese Aufgabe wird erfindungsgemäß dadurch gelöst, dass die Steuer- und Auswerteeinrichtung dazu ausgelegt ist, bei der genannten Betriebsweise für eine einzelne Schätzung eines Winkels eines Radarziels eine Auswertung der Signale der Auswertungskanäle für eine jeweilige Entfernung für einen jeweiligen Auswertungskanal vorzunehmen, wobei die Auswertung der Signale der Auswertungskanäle für den jeweiligen Auswertungskanal bei einer jeweiligen Frequenzlage vorgenommen wird, die der betreffenden Entfernung entspricht, wobei in Abhängigkeit von einer Winkelhypothese oder Winkelbereichshypothese zumindest für eine Winkelhypothese oder Winkelbereichshypothese unterschiedliche Entfernungen und unterschiedliche Frequenzlagen für jeweilige Auswertungskanäle ausgewählt werden, wobei die jeweiligen Frequenzlagen den jeweiligen Entfernungen entsprechen. Somit wird für eine einzelne Schätzung eines Winkels eines Radarziels jedem Auswertungskanal eine jeweilige Entfernung zugeordnet, für welche die Auswertung vorgenommen wird.

Somit wird die Auswertung der Signale der Auswertungskanäle bei einer jeweiligen Frequenzlage für einen jeweiligen Auswertungskanal vorgenommen, wobei in Abhängigkeit von einer Winkelhypothese oder Winkelbereichshypothese zumindest für eine Winkelhypothese oder Winkelbereichshypothese unterschiedliche Frequenzlagen für jeweilige Auswertungskanäle ausgewählt werden. So entsprechen etwa bei einem FMCW-Radarsensor jeweilige Frequenzlagen jeweiligen Entfernungen.

Die Steuer- und Auswerteeinrichtung ist dazu ausgelegt, bei der genannten Betriebsweise für eine einzelne Schätzung eines Winkels eines Radarziels die Auswertung der Signale der Auswertungskanäle für den jeweiligen Auswertungskanal bei einer jeweiligen Frequenzlage vorzunehmen, die der betreffenden Entfernung entspricht.

Weiter wird die Aufgabe durch ein Verfahren für einen Radarsensor für Kraftfahrzeuge, zur Winkelschätzung von Radarzielen anhand von Amplituden-und/oder Phasenbeziehungen zwischen Signalen, die für unterschiedliche Konfigurationen von sendenden und empfangenden Antennen des Radarsensors in jeweiligen Auswertungskanälen des Radarsensors erhalten werden, gelöst, bei dem für eine einzelne Schätzung eines Winkels eines Radarziels eine Auswertung der Signale der Auswertungskanäle für eine jeweilige Entfernung für einen jeweiligen Auswertungskanal vorgenommen wird, wobei in Abhängigkeit von einer Winkelhypothese oder Winkelbereichshypothese zumindest für eine Winkelhypothese oder Winkelbereichshypothese unterschiedliche Entfernungen für jeweilige Auswertungskanäle ausgewählt werden.

Für die Schätzung des Winkels erfolgt insbesondere eine Auswertung der Amplitude und/oder Phase der betreffenden Signale der Auswertungskanäle für die jeweilige Entfernung, oder es erfolgt eine Auswertung der Amplitude und/oder Phase der betreffenden Signale bei der jeweiligen Frequenzlage der Auswertungskanäle.

Für die Winkelschätzung wird somit ein Vektor verwendet, dessen Komponenten unterschiedlichen Entfernungen bzw. Frequenzlagen der Signale der jeweiligen Auswertungskanäle entsprechen; zumindest für eine Winkelhypothese unterscheiden sich somit die Entfernungen bzw. Frequenzlagen für zumindest zwei Auswertungskanäle voneinander. Dadurch kann dem Effekt begegnet werden, dass bei großer Bandbreite und bei großer Apertur je nach Winkel eines Radarziels und je nach Konfiguration der sendenden und empfangenden Antennen eines Auswertungskanals eine Verschiebung der Frequenzlage des dem Radarziel entsprechenden Peaks auftritt.

Die Unterschiede zwischen den Entfernungen bzw. Frequenzlagen können außerdem in Abhängigkeit von der Entfernung des Radarziels gewählt werden. So ist bei großen Entfernungen der Winkelunterschied, unter dem unterschiedliche Antennen das Radarziel "sehen", geringer als bei kleineren Entfernungen; dementsprechend ist auch der Lauflängenunterschied der Signale geringer.

Die Antennenanordnung ist vorzugsweise eine planare Anordnung der Antennen, etwa ein Antennenarray mit einem regelmäßigen Versatz zwischen den empfangenden Antennen, oder ein ausgedünntes Antennenarray.

Vorteilhafte Ausgestaltungen und Weiterbildungen der Erfindung sind in den Unteransprüchen angegeben.

In einer zweckmäßigen Ausführungsform ist die Steuer- und Auswerteeinrichtung dazu ausgelegt, bei der genannten Betriebsweise den Konfigurationen von sendenden und empfangenden Antennen der Auswertungskanäle entsprechende, winkelabhängige Entfernungsunterschiede als Unterschiede der Entfernungen oder Verschiebungen der Frequenzlage zwischen betreffenden Auswertungskanälen zu berücksichtigen. D.h., die berücksichtigten Verschiebungen der Frequenzlage entsprechen den jeweiligen Entfernungsunterschieden. Dabei kann auch eine Entfernungsabhängigkeit der Entfernungsunterschiede berücksichtigt werden. Ein Entfernungsunterschied kann beispielsweise als Entfernungsdifferenz bezogen auf einen Auswertungskanal angegeben werden, oder als Bin-Verschiebung bezogen auf einen Bin einer FFT. Zweckmäßigerweise werden mit zunehmendem Lauflängenunterschied zunehmende Unterschiede der Entfernungen oder Verschiebungen der Frequenzlage berücksichtigt.

In einer zweckmäßigen Ausführungsform ist die Steuer- und Auswerteeinrichtung dazu ausgelegt, bei der genannten Betriebsweise für wenigstens einen Auswertungskanal zumindest für zwei Winkelhypothesen oder Winkelbereichshypothesen Entfernungen bzw. Frequenzlagen auszuwählen, die sich voneinander unterscheiden.

In einer zweckmäßigen Ausführungsform ist die Steuer- und Auswerteeinrichtung dazu ausgelegt, bei der genannten Betriebsweise für eine einzelne Schätzung eines Winkels eines Radarziels in Abhängigkeit von einer Entfernungsauflösung des Radarsensors und in Abhängigkeit von der Winkelhypothese oder Winkelbereichshypothese zu entscheiden, ob unterschiedliche Entfernungen bzw. Frequenzlagen für jeweilige Auswertungskanäle ausgewählt werden, und welche Entfernungen bzw. Frequenzlagen für jeweilige Auswertungskanäle ausgewählt werden. Beispielsweise kann bei einem Winkel bei oder um 0° keine Berücksichtigung einer Frequenzverschiebung erforderlich sein. Die Entscheidung kann zusätzlich in Abhängigkeit der Entfernung des Radarziels erfolgen.

In einer zweckmäßigen Ausführungsform ist die Steuer- und Auswerteeinrichtung dazu ausgelegt, bei der genannten Betriebsweise zumindest für eine Winkelhypothese oder Winkelbereichshypothese gleiche Entfernungen bzw. Frequenzlagen für die Auswertungskanäle auszuwählen. Diese werden für die Schätzung des Winkels verwendet. Dieser Winkel(-Bereich) entspricht vorzugsweise einem mittleren Winkel(-Bereich) oder einer Symmetrierichtung des Radarsensors.

In einer Ausführungsform ist die Steuer- und Auswerteeinrichtung dazu ausgelegt, die empfangenen Signale einer diskreten Fourier-Transformation zu unterziehen, wobei die Steuer- und Auswerteeinrichtung dazu ausgelegt ist, bei der genannten Betriebsweise für die jeweiligen Auswertungskanäle bei der diskreten Fourier-Transformation Spektralkomponenten für die ausgewählten Entfernungen bzw. Frequenzlagen zu berechnen und für die Schätzung des Winkels auszuwerten. Durch eine direkte Berechnung der Fourier-Transformation oder einer einzelnen Fourier-Komponente des Frequenzspektrums an der jeweils ausgewählten Frequenzlage können die oben erwähnten Phasenfehler und Amplitudenfehler einer FFT mit festem Frequenzraster vermieden werden.

In einer anderen Ausführungsform ist die Steuer- und Auswerteeinrichtung dazu ausgelegt, aus den empfangenen Signalen durch diskrete Fourier-Transformation Fourier-Spektren für die jeweiligen Auswertungskanäle zu berechnen, wobei die Steuer- und Auswerteeinrichtung dazu ausgelegt ist, bei der genannten Betriebsweise die für die Winkelschätzung für eine jeweilige Entfernung, bzw. bei einer jeweiligen Frequenzlage, auszuwertenden Signale durch Interpolation von Spektralkomponenten des betreffenden Fourier-Spektrums zu bestimmen. Dies ist besonders vorteilhaft, da unabhängig von den Winkelhypothesen eine Berechnung der Fourier-Spektren der Empfangskanäle erfolgen kann, und dann für die Winkelschätzung jeweils durch Interpolation eine Auswertung der Signale auch an Zwischenstellen zwischen den Stützfrequenzen der Fourier-Spektren erfolgen kann, d.h. an Frequenzen, welche der jeweiligen Frequenzlage benachbart sind. Somit kann eine hohe Trennfähigkeit sowohl in der Entfernung als auch im Winkel bei einer einfachen und effizienten Berechnung erzielt werden.

Die für die Erfindung und die Ausführungsformen genannten Merkmale sind besonders vorteilhaft, wenn bei dem Radarsensor für wenigstens zwei Auswertungskanäle ein maximaler durch die Konfigurationen von sendenden und empfangenden Antennen erzeugter Entfernungsunterschied zu einem Radarziel wenigstens 40% der Entfernungsauflösung entspricht, oder insbesondere wenigstens 80% der Entfernungsauflösung entspricht. Vorzugsweise entspricht für wenigstens zwei Auswertungskanäle ein maximaler durch die Konfigurationen von sendenden und empfangenden Antennen erzeugter Entfernungsunterschied zu einem Radarziel wenigstens 20%, weiter vorzugsweise wenigstens 33% oder wenigstens 40% oder wenigstens 50% oder wenigstens 80% oder wenigstens 100% der Entfernungsauflösung. Insbesondere kann bereits bei einem Entfernungsunterschied von mehr als 80% der Entfernungsauflösung der bei der FFT entstehende Amplitudenfehler unzulässig groß werden und beispielsweise 1dB übersteigen, wobei der tolerierbare Fehler von der jeweiligen Anwendung abhängt. Der maximal durch die Konfigurationen von sendenden und empfangenden Antennen erzeugte Entfernungsunterschied kann beispielsweise bei Winkeln im Bereich bis 90° der (virtuellen) Apertur der Antennenanordnung entsprechen.

Im folgenden werden Ausführungsbeispiele anhand der Zeichnung näher erläutert. Es zeigen:

Fig. 1    ein Blockdiagramm eines erfindungsgemäßen Radarsensors für Kraftfahrzeuge;

Fig. 2    eine schematische Darstellung von Frequenzbins von Fourier-Spektren jeweiliger Auswertungskanäle;

Fig. 3    eine Beziehung zwischen zwei Antennen und einem Radarziel; und

Fig. 4    ein Flussdiagramm zur Erläuterung eines erfindungsgemäßen Verfahrens.

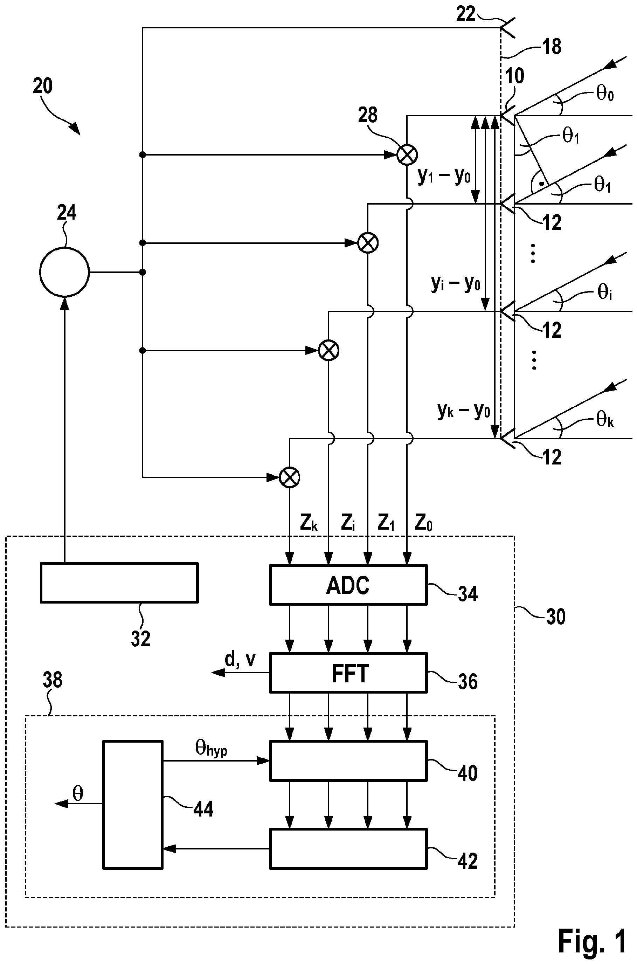

Der in Fig. 1 gezeigte Radarsensor weist mehrere emfangende Antennen oder Antennenelemente 10, 12 auf einem gemeinsamen Substrat 18 auf. Der Radarsensor wird so in ein Kraftfahrzeug eingebaut, dass mehrere der Antennen 10, 12 auf gleicher Höhe nebeneinander an horizontalen Positionen yi liegen, i=0,...,k, so dass ein Winkelauflösungsvermögen des Radarsensors in der Horizontalen (im Azimut) erreicht wird. In Fig. 1 sind symbolisch Radarstrahlen dargestellt, die von den Antennen unter einem jeweiligen Azimutwinkel $\theta i$ empfangen werden.

Ein Hochfrequenzteil 20 zur Ansteuerung einer sendenden Antenne 22 umfasst einen lokalen Oszillator 24, der das zu sendende Radarsignal erzeugt. Die von den Antennen 10, 12 empfangenen Radarechos werden jeweils einem Mischer 28 zugeführt, wo sie mit dem vom Oszillator 24 gelieferten Sendesignal gemischt werden. Auf diese Weise erhält man für jedes der Antennen 10, 12 ein Basisbandsignal oder Zwischenfrequenzsignal Z0, Z1, ..., Zi, ..., Zk, das einer elektronischen Steuer- und Auswerteeinheit 30 zugeführt wird.

Die Steuer- und Auswerteeinheit 30 enthält einen Steuerungsteil 32, der die Funktion des Oszillators 24 steuert. Im gezeigten Beispiel handelt es sich bei dem Radarsensor um ein FMCW-Radar, d.h., die Frequenz des vom Oszillator 24 gelieferten Sendesignals wird periodisch in Form einer Folge von steigenden und/oder fallenden Frequenzrampen moduliert.

Weiterhin enthält die Steuer- und Auswerteeinrichtung 30 einen Auswerteteil mit einem Analog/Digital-Wandler 34 mit k Kanälen, der die von den k Antennen 10, 12 erhaltenen Zwischenfrequenzsignale Z0 - Zk digitalisiert und jeweils über die Dauer einer einzelnen Frequenzrampe aufzeichnet. Die so erhaltenen Zeitsignale werden dann kanalweise in einer Transformationsstufe 36 durch Schnelle Fouriertransformation in entsprechende Frequenzspektren umgewandelt. In diesen Frequenzspektren zeichnet sich jedes Radarziel in der Form eines Peaks ab, dessen Frequenzlage von der Signallaufzeit vom Radarsensor zum Radarziel und zurück zum Radarsensor sowie - aufgrund des Doppler-Effektes - von der Relativgeschwindigkeit des Radarziels abhängig ist. Aus den Frequenzlagen zweier Peaks, die für dasselbe Radarziel erhalten wurden, jedoch auf Frequenzrampen mit unterschiedlicher Steigung, beispielsweise einer steigenden Rampe und einer fallenden Rampe, lässt sich dann in bekannter Weise der Abstand d und die Relativgeschwindigkeit v des betreffenden Radarzieles berechnen.

Wie in Fig. 1 anhand der Radarstrahlen schematisch dargestellt wird, führen die unterschiedlichen Positionen der Antennen 10, 12 dazu, dass die Radarstrahlen, die von ein und derselben Antenne emittiert wurden, am Radarziel reflektiert wurden und dann von den verschiedenen Antennen empfangen werden, unterschiedliche Lauflängen zurücklegen und deshalb Phasenunterschiede aufweisen, die vom Azimutwinkel $\theta$ des Radarziels abhängig sind. Auch die zugehörigen Zwischenfrequenzsignale Z0 - Zk weisen entsprechende Phasenunterschiede auf. Auch die Amplituden (Beträge) der empfangenen Signale sind von Antenne zu Antenne unterschiedlich, ebenfalls abhängig vom Azimutwinkel $\theta$. Ein Winkelschätzer 38 vergleicht für jedes geortete Objekt, d.h. jedes Radarziel (jeden Peak im Frequenzspektrum) die in den k Empfangskanälen erhaltenen komplexen Amplituden mit dem Antennendiagramm, um so den Azimutwinkel $\theta$ des Radarziels zu schätzen. Der Winkelschätzer umfasst beispielsweise einen Interpolator 40, einen Korrelator 42, und einen Entscheider 44, die nachfolgend erläutert werden.

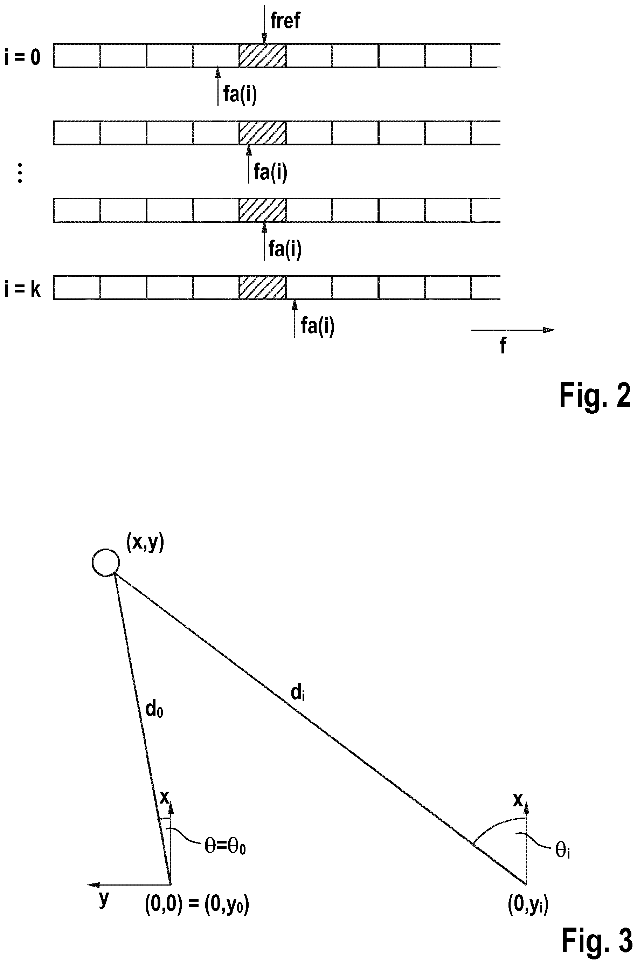

Bei einer hohen Bandbreite, entsprechend einem großen Frequenzhub der FMCW-Modulation, und einer großen Ausdehnung der Antennenanordnung sind jedoch je nach Azimutwinkel $\theta$ des Radarziels und je nach seinem Abstand d die komplexen Amplituden in den einzelnen Empfangskanälen an unterschiedlichen Frequenzlagen fa(i) im Frequenzspektrum des empfangenen Signals enthalten. Dies ist schematisch in Fig. 2 illustriert, wobei in der Richtung zunehmender Frequenz f aufeinanderfolgende Frequenzbins des Fourier-Spektrums dargestellt sind. Die unterschiedlichen Frequenzlagen fa(i) entsprechen unterschiedlichen individuellen Entfernungen di. Es kann dann - anders als bei einer herkömmlichen Winkelschätzung - nicht mehr davon ausgegangen werden, dass die zu einem Radarziel gehörenden Signale in den unterschiedlichen Auswertungskanälen in gleicher Weise auf jeweils denselben, in Fig. 2 schraffiert gekennzeichneten Bin des Fourier-Spektrums abgebildet werden. Um diesen Effekt zu berücksichtigen, wird von dem Interpolator 40 eine für die einzelnen Kanäle i in Abhängigkeit einer zu überprüfenden Winkelhypothese θhyp zu erwartende jeweilige Frequenzverschiebung fa(i) berechnet. Der Interpolator 40 wählt die für die Winkelschätzung heranzuziehende Spektralkomponente(n) des Peaks auf der Basis der erwarteten Frequenzverschiebung fa gegenüber einer Referenz-Frequenzlage fref des Peaks aus. Als Referenz-Frequenzlage fref wird beispielsweise die Frequenzlage für eine Antennenkonfiguration gewählt, gegenüber welcher andere Antennenkonfigurationen bei einem Radarziel mit mittlerem Winkel zu kleineren und zu größeren Winkeln symmetrische Frequenzverschiebungen aufweisen. Als Referenz-Frequenzlage kann die Frequenzlage für eine mittlere Antenne gewählt werden. Zumindest bei einer sich aus der Frequenzverschiebung ergebenden, ausgewählten Frequenzlage zwischen zwei Frequenzlagen, für welche die FFT berechnet wurde, führt der Interpolator 40 außerdem eine Interpolation der zu der ausgewählten Frequenzlage benachbarten Spektralkomponenten der betreffenden Bins durch, um einen Wert des Frequenzspektrums für die korrekte, ausgewählte Frequenzlage mit korrekter Amplitude und Phase zu bestimmen.

Die für die ausgewählten Frequenzlagen in den einzelnen Kanälen bestimmten und ggf. interpolierten Signale werden als Vektor dem Korrelator 42 übergeben, der in an sich bekannter Weise eine Korrelation der in im Vektor zusammengestellten komplexen Amplituden mit dem Antennendiagramm für die betreffende Winkelhypothese berechnet und das Ausmaß der Korrelation an den Entscheider 44 ausgibt. Der Korrelator 42 greift dabei auf das gespeicherte Antennendiagramm zu. Der Entscheider 44 bestimmt den Wert des Winkels als wahrscheinlichsten Wert für den Azimutwinkel, bei dem die gemessenen Amplituden des Vektors am besten mit den im den Antennendiagramm abgelesenen Werten korrelieren. Entsprechend einem Detektionswinkelbereich des Radarsensors werden mehrere Winkelhypothesen oder Winkelhypothesenbereiche auf Übereinstimmung der gemessenen Signale mit den anhand eines Antennendiagramms berechneten Signalen überprüft. Dabei ist es auch denkbar, dass der Interpolator 40 nicht für jede einzelne zu überprüfende Winkelhypothese die Frequenzlagen bestimmt und Interpolationen durchführt, sondern dass der Interpolator 40 für Bereiche von Winkelhypothesen eine repräsentative Auswahl der Frequenzlagen der einzelnen Auswertungskanäle und ggf. eine Interpolation der Spektralkomponenten durchführt.

Für eine zu überprüfende Winkelhypothese oder einen Winkelhypothesenbereich erfolgt somit - je nach Notwendigkeit aufgrund des Winkels und der Entfernungsauflösung - eine Vorverarbeitung der in die Winkelschätzung eingehenden Daten.

So kann beispielsweise für einen Bereich von -30° bis +30° direkt ein Vektor aus jeweils derselben Frequenzlage der Signale zusammengestellt werden, für einen Bereich von +30° bis +60° eine für den jeweiligen Auswertungskanal für den Bereich repräsentative Verschiebung der Frequenzlage berücksichtigt werden, usw.; die angegebenen Bereichsgrenzen dienen lediglich zur Erläuterung des Prinzips und können in der Praxis je nach Entfernungsauflösung und erforderlicher Genauigkeit der Daten für die Winkelschätzung bestimmt werden.

Die Abhängigkeit der komplexen Amplituden, also der Absolutbeträge und Phasen, der empfangenen Signale an den korrekten Frequenzlagen vom Azimutwinkel θ kann für jede Antenne in Form eines Diagramms in der Steuer- und Auswerteeinheit 30 hinterlegt sein. Die Diagramme für die einzelnen Antennen lassen sich zu einem Antennendiagramm kombinieren, das für jede Antenne die Amplitude des empfangenen Signals als Funktion des Azimutwinkels angibt.

Fig. 3 illustriert in der Draufsicht für zwei Antennen, bezeichnet mit den Indizes 0 und i an den Koordinaten (0,y0) und (0,yi), die Beziehung zu einem Punktziel als Radarziel an den Koordinaten (x,y). Die Abstände des Punktziels von den einzelnen Antennen sind mit d0, di bezeichnet, und die Einfallswinkel (Azimutwinkel) des empfangenen Radarsignals mit θ0 bzw. θi. Zur Vereinfachung der Darstellung wird angenommen, dass der Ursprung (0,0) den Mittelpunkt des Antennenarrays darstellt und einer mittleren Position der empfangenden Antennen 10, 12 entspricht.

Für jede Antenne mit dem Index i gilt:

$$d_i = (x^2 + (y-y_i)^2)^{1/2}$$

und

$$\theta_i = \operatorname{atan}((y-y_i)/x)$$

für die Positionen und Winkel des Radarziels.

Als Schätzgrößen des Radarsensors sollen die Koordinaten des Radarziels bezogen auf den Ursprung ermittelt werden, d.h.

$$d = (x^2 + y^2)^{1/2}$$

und

$$\theta = \text{atan } (y/x).$$

Je Antenne ist der Unterschied zu den mittleren Größen:

$$\Delta d_i = d_i - d = (x^2 + (y-y_i)^2)^{1/2} - (x^2 + y^2)^{1/2}$$

und

$$\Delta\theta_i = \theta_i - \theta = \text{atan } ((y-y_i)/x) - \text{atan } (y/x),$$

wobei $\Delta d_i$ den Entfernungsunterschied und $\Delta\theta_i$ den Azimutwinkelunterschied bezeichnen.

Der der aufgrund der Lauflängenunterschiede von dem Radarsensor "gesehene" Entfernungsunterschied zwischen den Auswertungskanälen hängt von der Antennenkonfiguration ab. So werden in einem bistatischen System bzw. einem MIMO-System die Effekte (Entfernung bzw. Laufzeit) für den Weg von der Sendeantenne zum Ziel und vom Ziel zur Empfangsantenne addiert und gemittelt.

Die geschätzte Entfernung wird beispielsweise bestimmt über die Gesamtlaufzeit des Signals, aufgeteilt in Hin- und Rückweg, und damit als mittlere Entfernung über die mittlere Laufzeit des Signals.

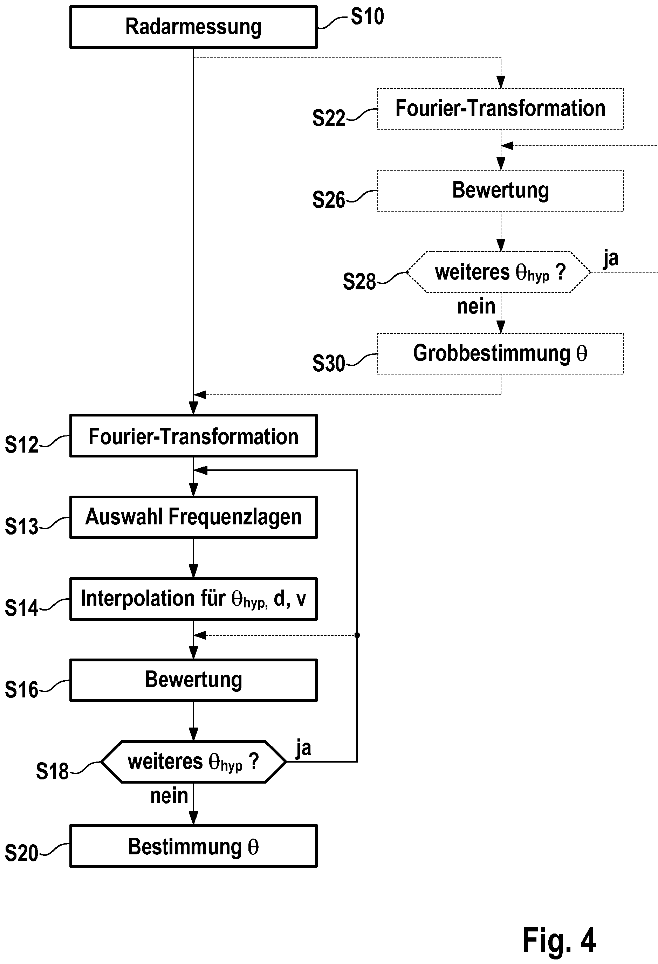

Fig. 4 illustriert ein Verfahren gemäß der oben beschriebenen Betriebsweise der Steuer- und Auswerteeinrichtung. In Schritt S10 erfolgt die Radarmessung und A/D-Wandlung der Zwischenfrequenzsignale der Kanäle. In den jeweiligen Auswertungskanälen erfolgt in Schritt S12 eine schnelle Fourier-Transformation (FFT). In Schritt S14 erfolgt im Frequenzspektrum einzelner Auswertungskanäle eine Interpolation für die zu überprüfende Winkelhypothese bzw. einen Winkelhypothesenbereich, wobei in Schritt S13 eine jeweilige Frequenzlage, an der im betreffenden Auswertungskanal interpoliert wird, in Abhängigkeit von der Winkelhypothese/ dem Winkelhypothesenbereich und von d, v ausgewählt wird. In Schritt S16 erfolgt durch Bestimmung der Korrelation mit einem Antennendiagramm eine Bewertung der Winkelhypothese / des Winkelhypothesenbereichs auf Übereinstimmung der gemessenen und interpolierten Signale mit anhand des Antennendiagramms erwarteten Signalen. Sofern in Schritt S18 festgestellt wird, dass noch eine weitere Winkelhypothese zu überprüfen ist, erfolgt eine entsprechende Wiederholung ab Schritt S13. Es kann auch die Interpolation für eine repräsentative Winkelhypothese eines Bereichs von Winkelhypothesen durchgeführt werden, während die betreffenden Winkelhypothesen des Bereichs dennoch einzeln bewertet werden. Die Wiederholung erfolgt dann für eine jeweilige repräsentative Winkelhypothese ab Schritt S16, und für einen neuen Winkelhypothesenbereich ab Schritt S13. Abschließend wird in Schritt S20 die Winkelhypothese mit der besten Bewertung als geschätzter Winkel bestimmt.

In einem anderen Ausführungsbeispiel wird von der Steuer- und Auswerteeinrichtung 30 in einem ersten Schritt eine herkömmliche Winkelschätzung vorgenommen, jedoch mit verringerter Größe des genutzten Antennenarrays. Dabei wird für die Winkelschätzung im ersten Schritt aus den jeweiligen Auswertungskanälen, die einer Teilmenge der Auswertungskanäle entsprechen, eine Auswertung der Fourier-Spektren an jeweils einer gleichen Stelle vorgenommen. Im ersten Schritt wird der Interpolator 40 beispielsweise nicht verwendet. Vorzugsweise ist die genutzte Ausdehnung der Antennenanordnung in der ersten Richtung dabei auf einen Wert beschränkt, für den ein maximaler für wenigstens zwei Auswertungskanäle durch die Konfigurationen von sendenden und empfangenden Antennen erzeugter Entfernungsunterschied zu einem Radarziel weniger als 80%, besonders bevorzugt weniger als 40%, der Entfernungsauflösung entspricht.

Es ergibt sich im ersten Schritt eine grobe Winkelschätzung. Basierend auf dem Ergebnis der ersten Schätzung werden dann Winkelhypothesen oder eine oder mehrere Winkelbereichshypothesen bestimmt, und für diese Hypothesen wird dann die bereits beschriebene Auswertung mit einer Auswahl unterschiedlicher Frequenzlagen für jeweilige Auswertungskanäle durchgeführt. Auf diese Weise kann durch eine Vorschätzung im ersten Schritt der Verarbeitungsaufwand für die genauere Winkelschätzung im zweiten Schritt verringert werden.

Fig. 4 illustriert die grobe Winkelschätzung des ersten Schritts mit den Schritten S22, S26, S28 und S30, die bis auf die verringerte Teilmenge der Auswertungskanäle den Schritten S12 der Fourier-Transformation, S16 der Bewertung, S18 und S20 entsprechen.

Die beschriebenen Betriebsweisen der Steuer- und Auswerteeinrichtung 30 können in entsprechender Weise bei einem MIMO-Radarsensor vorgesehen sein. Hier entsprechen k Auswertekanäle unterschiedlichen Konfigurationen von sendenden und empfangenden Antennen. Wenn ein durch mehrere Empfangsantennen 10, 12 gebildete Empfangsarray eine reale Apertur von z.B. $m\,\lambda$ hat, kann beispielsweise durch abwechselnde Nutzung zweier Sendeantennen 22 eine ein virtuelles Empfangsarray mit der doppelten Apertur $2\,m\,\lambda$ gebildet werden, so dass sich prägnantere Phasen- und Amplitudendifferenzen ergeben und somit eine schärfere Winkeltrennung ermöglicht wird. Mehrere Sendeantennen können auch mit einem Frequenz- oder Codemultiplex-Verfahren gleichzeitig zum Senden verwendet werden.

Bei den Antennen 10, 12 und 22 kann es sich um Gruppenantennen handeln, die jeweils ein Array von Patches umfassen, die gleichphasig angesteuert werden bzw. unter Erhalt der Phasen zu einem Empfangssignal zusammengefasst werden.

Bei den hier beschriebenen Ausführungsbeispielen wird mit einem bistatischen Antennenkonzept gearbeitet. Wahlweise könnte jedoch auch eine monostatisches Antennenkonzept benutzt werden, bei dem dieselben (Gruppen-) Antennen zum Senden und zum Empfang genutzt werden.

Die beschriebene Betriebsweise der Steuer- und Auswerteeinrichtung kann vorteilhaft insbesondere bei FMCW-Radarsensoren eingesetzt werden, die mit sogenannten Rapid-Chirp-Sequenzen arbeiten. Dabei wird in rascher Folge eine Vielzahl von Frequenzrampen (Chirps) durchfahren, die eine große Steigung und nur eine relativ geringe Dauer haben.

**Patentansprüche**

1. Winkelauflösender Radarsensor für Kraftfahrzeuge, mit einer Antennenordnung mit mehreren zum Empfang eingerichteten Antennen (10, 12), die in einer Richtung (y), in welcher der Radarsensor winkelauflösend ist, in verschiedenen Positionen (yi) angeordnet sind, und mit einer Steuer- und Auswerteeinrichtung (30), die für eine Betriebsweise ausgelegt ist, bei der wenigstens eine zum Senden eingerichtete Antenne (22) des Radarsensors ein Signal sendet, das von mehreren der zum Empfangen eingerichteten Antennen (10, 12) des Radarsensors empfangen wird, und der Winkel ($\theta$) eines Radarziels anhand von Amplituden- und/oder Phasenbeziehungen zwischen Signalen jeweiliger Auswertungskanäle (i) geschätzt wird, die unterschiedlichen Konfigurationen von sendenden und empfangenden Antennen entsprechen,

 **dadurch gekennzeichnet, dass** die Steuer- und Auswerteeinrichtung (30) dazu ausgelegt ist, bei der genannten Betriebsweise für eine einzelne Schätzung eines Winkels ($\theta$) eines Radarziels eine Auswertung der Signale der Auswertungskanäle für eine jeweilige Entfernung (di) für einen jeweiligen Auswertungskanal (i) vorzunehmen, wobei die Auswertung der Signale der Auswertungskanäle für den jeweiligen Auswertungskanal bei einer jeweiligen Frequenzlage (fa) vorgenommen wird, die der betreffenden Entfernung (di) entspricht, wobei in Abhängigkeit von einer Winkelhypothese ($\theta_{hyp}$) oder Winkelbereichshypothese zumindest für eine Winkelhypothese oder Winkelbereichshypothese unterschiedliche Entfernungen (di) und unterschiedliche Frequenzlagen für jeweilige Auswertungskanäle (i) ausgewählt werden, wobei die jeweiligen Frequenzlagen den jeweiligen Entfernungen entsprechen.

2. Radarsensor nach Anspruch 1, bei dem die Steuer- und Auswerteeinrichtung (30) dazu ausgelegt ist, bei der genannten Betriebsweise den Konfigurationen von sendenden und empfangenden Antennen der Auswertungskanäle entsprechende, winkelabhängige Entfernungsunterschiede ($\Delta$di) als Unterschiede der Entfernungen (di) zwischen betreffenden Auswertungskanälen (i) zu berücksichtigen.

3. Radarsensor nach einem der vorstehenden Ansprüche, bei dem die Steuer- und Auswerteeinrichtung (30) dazu ausgelegt ist, bei der genannten Betriebsweise für eine einzelne Schätzung eines Winkels ($\theta$) eines Radarziels in Abhängigkeit von einer Entfernungsauflösung des Radarsensors und in Abhängigkeit von der Winkelhypothese ($\theta_{hyp}$) oder Winkelbereichshypothese zu entscheiden, ob unterschiedliche Entfernungen (di) für jeweilige Auswertungskanäle (i) ausgewählt werden, und welche Entfernungen (di) für jeweilige Auswertungskanäle ausgewählt werden.

4. Radarsensor nach einem der vorstehenden Ansprüche, bei der die Steuer- und Auswerteeinrichtung (30) dazu ausgelegt ist, die empfangenen Signale einer diskreten Fourier-Transformation zu unterziehen, wobei die Steuer- und Auswerteeinrichtung (30) dazu ausgelegt ist, bei der genannten Betriebsweise für die jeweiligen Auswertungskanäle (i) bei der diskreten Fourier-Transformation Spektralkomponenten für die ausgewählten Entfernungen (di) zu berechnen und für die Schätzung des Winkels ($\theta$) auszuwerten.

5. Radarsensor nach einem der vorstehenden Ansprüche, bei dem die Steuer- und Auswerteeinrichtung (30) dazu ausgelegt ist, aus den empfangenen Signalen durch diskrete Fourier-Transformation Fourier-Spektren für die jeweiligen Auswertungskanäle (i) zu berechnen, wobei die Steuer- und Auswerteeinrichtung (30) dazu ausgelegt ist, bei der genannten Betriebsweise die für die Winkelschätzung für eine jeweilige Entfernung (di) auszuwertenden Signale durch Interpolation von Spektralkomponenten des betreffenden Fourier-Spektrums zu bestimmen.

6. Radarsensor nach einem der vorstehenden Ansprüche, bei der für wenigstens zwei Auswertungskanäle ein maxi-

EP 3 752 858 B1

maler durch die Konfigurationen von sendenden und empfangenden Antennen erzeugter Entfernungsunterschied zu einem Radarziel wenigstens 40% der Entfernungsauflösung entspricht.

7. Radarsensor nach einem der vorstehenden Ansprüche, bei dem die Steuer- und Auswerteeinrichtung (30) dazu ausgelegt ist, bei der genannten Betriebsweise für eine einzelne Schätzung eines Winkels ($\theta$) eines Radarziels in einem ersten Schritt eine erste Winkelschätzung anhand von Amplituden-und/oder Phasenbeziehungen zwischen Signalen jeweiliger Auswertungskanäle auszuführen, die unterschiedlichen Konfigurationen von sendenden und empfangenden Antennen (22, 10, 12) entsprechen, wobei zur Schätzung des Winkels in den für die erste Winkelschätzung verwendeten Auswertungskanälen jeweils eine Auswertung für eine gleiche Entfernung (di) erfolgt, und wobei in einem zweiten Schritt die Auswertung der Signale der Auswertungskanäle (i) bei einer jeweiligen Entfernung (di) für einen jeweiligen Auswertungskanal (i) vorgenommen wird, wobei Winkelhypothesen ($\theta$hyp) oder Winkelbereichshypothesen, in Abhängigkeit derer unterschiedliche Entfernungen (di) für jeweilige Auswertungskanäle (i) ausgewählt werden, bestimmt werden basierend auf einem Ergebnis der ersten Winkelschätzung.

8. Radarsensor nach Anspruch 7, bei dem für die Winkelschätzung im ersten Schritt nur solche Auswertungskanäle (i) verwendet werden, die Konfigurationen von sendenden und empfangenden Antennen (22, 10, 12) entsprechen, welche Antennen einen Teil der Antennenanordnung bilden, der eine gegenüber der Verwendung aller Auswertungskanäle verringerte genutzte Ausdehnung in der genannten Richtung (y) hat, in welcher der Radarsensor winkelauflösend ist.

9. Verfahren für einen Radarsensor für Kraftfahrzeuge, gemäß einem der Ansprüche 1-8, zur Winkelschätzung von Radarzielen anhand von Amplituden- und/oder Phasenbeziehungen zwischen Signalen, die für unterschiedliche Konfigurationen von sendenden und empfangenden Antennen (22, 10, 12) des Radarsensors in jeweiligen Auswertungskanälen des Radarsensors erhalten werden, **dadurch gekennzeichnet, dass** für eine einzelne Schätzung eines Winkels eines Radarziels eine Auswertung der Signale der Auswertungskanäle für eine jeweilige Entfernung (di) für einen jeweiligen Auswertungskanal (i) vorgenommen wird, wobei die Auswertung der Signale der Auswertungskanäle für den jeweiligen Auswertungskanal bei einer jeweiligen Frequenzlage (fa) vorgenommen wird, die der betreffenden Entfernung (di) entspricht, wobei in Abhängigkeit von einer Winkelhypothese oder Winkelbereichshypothese zumindest für eine Winkelhypothese oder Winkelbereichshypothese unterschiedliche Entfernungen (di) und unterschiedliche Frequenzlagen für jeweilige Auswertungskanäle (i) ausgewählt werden, wobei die jeweiligen Frequenzlagen den jeweiligen Entfernungen entsprechen.

## Claims

1. Angle-resolving radar sensor for motor vehicles, having an antenna arrangement with a plurality of antennas (10, 12) which are configured for reception and are arranged in different positions (yi) in a direction (y) in which the radar sensor is angle-resolving, and having a control and evaluation device (30) which is designed for a method of operation in which at least one antenna (22) of the radar signal that is configured for transmission transmits a signal which is received by a plurality of the antennas (10, 12) of the radar sensor that are configured for reception, and the angle ($\Theta$) of a radar target is estimated on the basis of amplitude and/or phase relationships between signals from respective evaluation channels (i) which correspond to different configurations of transmitting and receiving antennas, **characterized in that** the control and evaluation device (30) is designed to evaluate the signals from the evaluation channels for a respective distance (di) for a respective evaluation channel (i) in said method of operation for an individual estimation of an angle ($\Theta$) of a radar target, wherein the signals from the evaluation channels are evaluated for the respective evaluation channel at a respective frequency position (fa) which corresponds to the relevant distance (di), wherein, on the basis of an angle hypothesis ($\theta$hyp) or angle range hypothesis, different distances (di) and different frequency positions are selected for respective evaluation channels (i) at least for an angle hypothesis or angle range hypothesis, wherein the respective frequency positions correspond to the respective distances.

2. Radar sensor according to Claim 1, in which the control and evaluation device (30) is designed to take into account angle-dependent distance differences ($\Delta$di), which correspond to the configurations of transmitting and receiving antennas of the evaluation channels, as differences in the distances (di) between relevant evaluation channels (i) in said method of operation.

3. Radar sensor according to one of the preceding claims, in which the control and evaluation device (30) is designed to decide, in said method of operation, for an individual estimation of an angle ($\Theta$) of a radar target on the basis of a distance resolution of the radar sensor and on the basis of the angle hypothesis ($\theta$hyp) or angle range hypothesis, whether different distances (di) are selected for respective evaluation channels (i) and which distances (di) are selected for respective evaluation channels.

4. Radar sensor according to one of the preceding claims, in which the control and evaluation device (30) is designed to subject the received signals to a discrete Fourier transform, wherein the control and evaluation device (30) is designed to calculate spectral components for the selected distances (di) and to evaluate them for the estimation of the angle ($\Theta$) in said method of operation for the respective evaluation channels (i) during the discrete Fourier transform.

5. Radar sensor according to one of the preceding claims, in which the control and evaluation device (30) is designed to calculate Fourier spectra for the respective evaluation channels (i) from the received signals by means of a discrete Fourier transform, wherein the control and evaluation device (30) is designed to determine the signals to be evaluated for the angle estimation for a respective distance (di) in said method of operation by interpolating spectral components of the relevant Fourier spectrum.

6. Radar sensor according to one of the preceding claims, in which a maximum distance difference to a radar target, which is produced by the configurations of transmitting and receiving antennas, corresponds to at least 40% of the distance resolution.

7. Radar sensor according to one of the preceding claims, in which the control and evaluation device (30) is designed, in said method of operation, for an individual estimation of an angle ($\Theta$) of a radar target, to carry out a first angle estimation in a first step on the basis of amplitude and/or phase relationships between signals from respective evaluation channels which correspond to different configurations of transmitting and receiving antennas (22, 10, 12), wherein, in order to estimate the angle in the evaluation channels used for the first angle estimation, an evaluation is respectively carried out for an identical distance (di), and wherein, in a second step, the signals from the evaluation channels (i) are evaluated at a respective distance (di) for a respective evaluation channel (i), wherein angle hypotheses ($\theta_{hyp}$) or angle range hypotheses, on the basis of which different distances (di) are selected for respective evaluation channels (i), are determined on the basis of a result of the first angle estimation.

8. Radar sensor according to Claim 7, in which, for the angle estimation in the first step, use is made only of those evaluation channels (i) which correspond to configurations of transmitting and receiving antennas (22, 10, 12), which antennas form a part of the antenna arrangement which has a used extent, which is reduced in comparison with the use of all evaluation channels, in said direction (y) in which the radar sensor is angle-resolving .

9. Method for a radar sensor for motor vehicles according to one of Claims 1-8 for estimating angles of radar targets on the basis of amplitude and/or phase relationships between signals which are obtained for different configurations of transmitting and receiving antennas (22, 10, 12) of the radar sensor in respective evaluation channels of the radar sensor, **characterized in that**, for an individual estimation of an angle of a radar target, the signals from the evaluation channels are evaluated for a respective distance (di) for a respective evaluation channel (i), wherein the signals from the evaluation channels are evaluated for the respective evaluation channel at a respective frequency position (fa) which corresponds to the relevant distance (di), wherein, on the basis of an angle hypothesis or angle range hypothesis, different distances (di) and different frequency positions are selected for respective evaluation channels (i) at least for an angle hypothesis or angle range hypothesis, wherein the respective frequency positions correspond to the respective distances.

## Revendications

1. Capteur radar à résolution angulaire pour véhicules automobiles, comprenant un agencement d'antennes qui comporte plusieurs antennes (10, 12) conçues pour la réception et disposées dans différentes positions (yi) dans une direction (y) dans laquelle le capteur radar présente une résolution angulaire, et un dispositif de commande et d'évaluation (30) conçu pour un mode de fonctionnement selon lequel au moins une antenne (22) du capteur radar conçue pour l'émission émet un signal qui est reçu par plusieurs des antennes (10, 12) du capteur radar conçues pour la réception, et l'angle ($\Theta$) d'une cible radar est estimé sur la base de relations d'amplitude et/ou de phase entre des signaux de canaux d'évaluation (i) respectifs qui correspondent à différentes configurations d'antennes d'émission et de réception,
**caractérisé en ce que** le dispositif de commande et d'évaluation (30) est conçu pour effectuer, dans ledit mode de fonctionnement et pour une estimation individuelle d'un angle ($\Theta$) d'une cible radar, une évaluation des signaux des canaux d'évaluation pour une distance respective (di) pour un canal d'évaluation (i) respectif, l'évaluation des signaux des canaux d'évaluation étant effectuée pour le canal d'évaluation respectif à une position de fréquence respective (fa) qui correspond à la distance concernée (di), différentes distances (di) et différentes positions de fréquence étant sélectionnées pour des canaux d'évaluation (i) respectifs en fonction d'une hypothèse d'angle ($\theta$hyp) ou d'une hypothèse de plage angulaire au moins pour une hypothèse d'angle ou une hypothèse de plage angulaire, les positions de fréquence respectives correspondant aux distances respectives.

2.  Capteur radar selon la revendication 1, dans lequel le dispositif de commande et d'évaluation (30) est conçu pour prendre en compte, dans ledit mode de fonctionnement, des différences de distance ($\Delta$di) dépendant de l'angle et correspondant aux configurations d'antennes d'émission et de réception des canaux d'évaluation, en tant que différences de distances (di) entre des canaux d'évaluation (i) concernés.

3.  Capteur radar selon l'une quelconque des revendications précédentes, dans lequel le dispositif de commande et d'évaluation (30) est conçu pour décider, dans ledit mode de fonctionnement et pour une estimation individuelle d'un angle ($\Theta$) d'une cible radar en fonction d'une résolution de distance du capteur radar et en fonction de l'hypothèse d'angle ($\theta$hyp) ou de l'hypothèse de plage angulaire, si différentes distances (di) sont sélectionnées pour des canaux d'évaluation (i) respectifs, et quelles distances (di) sont sélectionnées pour des canaux d'évaluation respectifs.

4.  Capteur radar selon l'une quelconque des revendications précédentes, dans lequel le dispositif de commande et d'évaluation (30) est conçu pour soumettre les signaux reçus à une transformation de Fourier discrète, le dispositif de commande et d'évaluation (30) étant conçu pour calculer, dans ledit mode de fonctionnement et pour les canaux d'évaluation (i) respectifs, lors de la transformation de Fourier discrète, des composantes spectrales pour les distances sélectionnées (di) et les évaluer pour l'estimation de l'angle (9).

5.  Capteur radar selon l'une quelconque des revendications précédentes, dans lequel le dispositif de commande et d'évaluation (30) est conçu pour calculer, à partir des signaux reçus, par transformation de Fourier discrète, des spectres de Fourier pour les canaux d'évaluation (i) respectifs, le dispositif de commande et d'évaluation (30) étant conçu pour déterminer, dans ledit mode de fonctionnement, les signaux à évaluer pour l'estimation d'angle et pour une distance respective (di) par interpolation de composantes spectrales du spectre de Fourier concerné.

6.  Capteur radar selon l'une quelconque des revendications précédentes, dans lequel, pour au moins deux canaux d'évaluation, une différence de distance maximale générée par les configurations d'antennes d'émission et de réception par rapport à une cible radar correspond au moins 40% de la résolution de distance.

7.  Capteur radar selon l'une quelconque des revendications précédentes, dans lequel le dispositif de commande et d'évaluation (30) est conçu pour effectuer, dans ledit mode de fonctionnement et pour une estimation individuelle d'un angle ($\Theta$) d'une cible radar, lors d'une première étape, une première estimation d'angle sur la base de relations d'amplitude et/ou de phase entre des signaux de canaux d'évaluation respectifs qui correspondent à différentes configurations d'antennes d'émission et de réception (22, 10, 12), une évaluation étant respectivement effectuée pour une même distance (di) afin d'estimer l'angle dans les canaux d'évaluation utilisés pour la première estimation d'angle et l'évaluation des signaux des canaux d'évaluation (i) étant effectuée lors d'une deuxième étape pour une distance respective (di) et pour un canal d'évaluation (i) respectif, des hypothèses d'angle ($\theta$hyp) ou des hypothèses de plage angulaire, en fonction desquelles différentes distances (di) sont sélectionnées pour des canaux d'évaluation (i) respectifs, étant déterminées sur la base d'un résultat de la première estimation d'angle.

8.  Capteur radar selon la revendication 7, dans lequel, pour l'estimation d'angle lors de la première étape, seuls sont utilisés les canaux d'évaluation (i) qui correspondent à des configurations d'antennes d'émission et de réception (22, 10, 12), lesquelles antennes constituent une partie de l'agencement d'antennes qui présente une extension utile réduite par rapport à l'utilisation de tous les canaux d'évaluation dans la direction (y) dans laquelle le capteur radar présente une résolution angulaire.

9.  Procédé pour un capteur radar pour véhicules automobiles selon l'une quelconque des revendications 1-8, pour l'estimation d'angle de cibles radar sur la base de relations d'amplitude et/ou de phase entre des signaux qui sont obtenus pour différentes configurations d'antennes d'émission et de réception (22, 10, 12) du capteur radar dans des canaux d'évaluation respectifs du capteur radar, **caractérisé en ce que**, pour une estimation individuelle d'un angle d'une cible radar, une évaluation des signaux des canaux d'évaluation pour une distance respective (di) est effectuée pour un canal d'évaluation (i) respectif, l'évaluation des signaux des canaux d'évaluation étant effectuée pour le canal d'évaluation respectif à une position de fréquence respective (fa) qui correspond à la distance concernée (di), différentes distances (di) et différentes positions de fréquence étant sélectionnées pour des canaux d'évaluation (i) respectifs en fonction d'une hypothèse d'angle ou d'une hypothèse de plage angulaire au moins pour une hypothèse d'angle ou une hypothèse de plage angulaire, les positions de fréquence respectives correspondant aux distances respectives.

EP 3 752 858 B1

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- US 20060022866 A1
- US 20140320331 A1
- DE 102015222884 A1